# EUROPEAN PATENT APPLICATION

(11) **EP 3 975 369 A1**
(43) Date of publication of application: **30.03.2022**
(21) Application number: 20382840.5
(22) Date of filing: 23.09.2020
(51) Int. Cl.: H02J 3/32, G06Q 50/06, H02J 3/38, H02J 3/46, H02J 13/00

(54) **PROSUMERS MULTISERVICE OPERATION MANAGEMENT SYSTEM, FOR DISTRIBUTED STORAGE NETWORKS**

(71) Applicant: Ampere Power Energy SL, 46530 Puzol (Valencia) (ES)
(72) Inventor: GUERRERO HERNÁNDEZ, Ignacio, 46530 Puzol (Valencia) (ES); PÉREZ RAMÍREZ, María Úrsula, 46530 Puzol (Valencia) (ES); BENÍTEZ SÁNCHEZ, Ignacio Javier, 46530 Puzol (Valencia) (ES)
(74) Representative: Hoffmann Eitle

(57) **Abstract**

The present invention refers to a system for managing distributed energy storage systems like a Virtual Power Plant (VPP). The system is adapted to process grid services requests from grid operators and/or market agents, and to dynamically set clusters of energy storage devices based on properties of the energy storage devices, and selecting those energy storage devices that are suitable to fulfill grid service operation requirements of at least one grid service. The system is further adapted to allow injection or absorption of energy to or from the grid during a time period, through at least one cluster of selected energy storage devices, to provide at least one grid service demanded by grid operators and/or market agents. The system of the invention enables the participation of a battery energy storage system in a plurality of grid services at the same time, so as to optimize the use of prosumers battery storage capacity, and enlarge prosumers participation in the electricity market.

## Description

### Field and object of the invention

The present invention refers in general to management systems or platforms for managing distributed energy storage devices configuring a Virtual Power Plant (VPP), to provide energy market services.

An object of the invention is to provide a management system for VPPs that extends prosumer participation in the electricity market.

Another object of the invention is to optimize the use of prosumers' battery storage capacity, by enabling battery energy storage devices to participate at the same time in a plurality of grid services, assuring the supply of the self-consumption demand of the energy storage device.

An additional object of the invention is to provide a management system for VPPs that dynamically assigns partial or full battery capacity to both the battery owner and a grid operator and/or market agent.

### Background of the invention

The integration of Battery Energy Storage Systems (BESS) into the electricity grid adds stability and complements the integration of higher shares of intermittent renewable energy resources, such as wind or photovoltaic (PV). BESS can inject or absorb energy as a response to an external order while also being able to regulate their output frequency and voltage to meet desired setpoints.

Self-consumption systems, either at commercial buildings, industrial sites or houses, that include a BESS to maximize their energy independence and the savings on the electricity bill, can also participate in these markets, by offering the available capacity that their batteries may have during the day. These services can be remunerated to the prosumers who own the BESS, allowing them to reduce the payback. The BESS need to be aggregated to reach the required levels of power and energy delivery requested to participate in the markets as a single virtual unit. The aggregation process requires a software platform capable of combining and orchestrating individual systems to focus on a specific action, to be determined by the market. These types of systems are known as Virtual Power Plants (VPPs).

A Virtual Power Plant (VPP) refers to a set of systems distributed in the electrical grid, which are combined to act as a traditional power plant. In a VPP there is room for a great variety of generation technologies (such as wind turbines and photovoltaic systems), storage systems (for example batteries and thermal accumulation) or controlled loads (including air conditioning, home automation and electric vehicles).

A VPP is also defined as a distributed battery controller platform with a global behaviour, i.e. all the batteries act as a virtual energy storage system with its aggregated capacity used in the different electricity markets for a variety of services: e.g. total consumption at a plant level can be shifted; active and reactive power can be modified; and frequency can be controlled following orders from the different electricity grid operators and/or market agents. Batteries are usually a part of self-consumption systems that combine energy storage with renewable energy generation sources installed in prosumers' premises.

Typically, VPPs are comprised of non-varying BESS clusters, with each device being limited to providing a single grid service at a time. Their flexibility (to inject/absorb power) is typically amassed by purchasing a rigid fraction of BESS capacity from their owners for a pre-agreed price.

VPP managers can then use that capacity upon demand, compromising BESS ability to provide essential services to their respective households. Following this paradigm, the VPP is taking advantage of only a small fraction of the BESS capacity. In addition to that, the loss of opportunity to self-consume that arises, because such capacity partition is usually not adequately priced by the pre-agreed capacity targeting contracts.

Consequently, current VPP technology is not only unfair to the prosumer, but also highly inflexible - limited by strict time and power constraints. In this way, devices typically cannot participate in more than one service and are "inflexibly" grouped into large aggregations that do not allow for the selection of best-suited batteries for specific jobs.

The U. S. patent publication US-2015/134280 A1 describes a platform for optimization and management of demand response resources. This patent publication is silent to any opportunity costs associated with the participation in providing grid services, nor a dynamic estimation of the flexibility or capacity available from all the distributed storage units.

The U. S. patent publication US2016118796 A1 describes a method for the overall optimization of the operation of distributed storage devices in an electrical power supply system having distributed generators and loads. Even though this solution involves an optimization based on a cost function, the information used is based on operational limits of the distributed resources, but no opportunity costs are mentioned.

None of the above prior art documents suggests the feature of selecting different clusters of distributed storage devices for different services, nor the possibility for each storage device to participate in more than one service at the same time.

Therefore, there is a need in this technical field for improved management systems that extend prosumers' participation in the electricity market, to optimize the use of prosumers' batteries storage capacity.

### Summary of the invention

The present invention is defined in the attached independent claim, and satisfactorily solves the shortcomings of the prior art outlined above, by providing a management system for distributed storage networks, like a VPP, that dynamically configures and manages clusters of distributed battery-based storage devices (or installations) for several grid market services, offering grid services at the same time to a plurality of electricity grid operators and/or energy market agents, thereby optimizing battery capacity and assuring an economical benefit to prosumers.

The system of the invention dynamically estimates and aggregates the capacities of Battery Energy Storage Systems (BESS) in behind-the-meter self-consumption installations, and offers their aggregated capacity to grid operators and/or market agents through a VPP, for grid services. The aggregated behaviour of all the distributed storage devices can be modified, absorbing or injecting energy on demand, providing either demand response or frequency regulation services.

Therefore, an aspect of the invention refers to a system for managing a network of distributed energy storage devices, wherein the system is adapted to operate a plurality of energy storage devices to inject and receive power into or from a power grid.

The system is further adapted to process grid services requests from grid operators and/or market agents, wherein the grid services are defined by operation requirements, and to dynamically set clusters of energy storage devices based on properties of the energy storage devices. The system selects those energy storage devices that are suitable to deliver or comply with grid service operation requirements of at least one grid service.

Some properties of the energy storage devices considered in this selection process are: geographic location and other characteristics, such as contractual (i.e., which is the retailer that is supplying the energy, or the aggregator that offers the flexibility services) or affiliation (e.g. local or energy community membership). Other potential properties might include the amount of renewable energy production, or the difference between the daily consumed and produced energy.

Some (not-limiting) examples of grid services involved in the invention are: node congestion management, matching local generation, managing position in the grid market, fast containment reserve, automatic frequency restoration and manual frequency restoration.

Furthermore, the system is further adapted to allow injection or absorption of energy into or from the grid during a time period, through at least one cluster of selected energy storage devices, to provide at least one grid service demanded by grid operators and/or market agents.

In that manner, the capacity of these distributed storage devices can be used for optimizing the operational curves of the energy storage devices estimating VPP elasticity, that is, the variable capacity available to inject or absorb power and the associated benefit of any of these provisions. In this way, the net utility for both the grid operators and/or market agents and the prosumers is maximized.

Furthermore, the system of the invention is also adapted to manage at least one energy storage device, such that that device can provide one or more grid services simultaneously to one or more grid operators and/or market agents.

In addition, the system is further adapted to dynamically assign an energy storage device to one or more than one cluster.

Moreover, the system can configure clusters of one or more energy storage devices within another cluster, such that a whole cluster or a part of it can be associated to another cluster.

The system is further adapted to monitor the status of the energy storage devices and grid operators and/or market agents services requirements, and based on forecast deviations of the requirements or newly detected requirements, discontinue the assignment of an energy storage device from the service and the cluster that it belongs to, and reassigning that device to a different cluster and/or to a newly detected grid service.

A "base case" is defined as an estimated operational curve of the batteries of an energy storage device, before considering a new market requirement that is regarded as an "offer case", and its associated operational costs.

The system of the invention includes an optimization module or optimizer, which is adapted to calculate the current base case of a VPP, to satisfy the end-user demand at the lowest possible cost according to grid tariffs, and previous market requirements if requested. Alternatively, the local control of each energy storage device can directly send the base case to the system's optimizer.

For a new grid market service request, the optimizer is adapted to add the corresponding requirement to the system to estimate its cost and compare it to the base case. The operational cost of a grid market service is the difference between offer and base costs. Whenever a market requirement or offer is accepted, this new estimated case becomes the base case, until it is updated or a new offer is accepted.

The optimizer includes restrictions, which provide flexibility to adapt to future energy markets via new restrictions and new terms to the cost function, and the ability to model energy flows to the grid. The management of the VPP can be customized simply by modifying or adding decision variables, cost function terms and/or new restrictions.

The optimizer is fed with at least the following data:
- forecast of household energy demand or load (ideally for today and tomorrow; for intraday and day-ahead market services),
- forecast of the renewable-source (if applicable),
- estimated (or real) state of charge at the beginning of the planning,
- configuration parameters from each device, including the state of charge limits, user-defined state of charge reservations (the rest of the state of charge is used by both user and market interaction), charge and discharge limits, battery capacity, renewable-source power limits (if applicable), and indispensably energy tariffs,
- according to the characteristics of the market services allowed, clustering parameters to filter the batteries that can participate in a service, such as location-related parameters and electrical-company contractual,
- ageing-related parameters for defining/characterizing the battery degradation and its economic impact,
- previously accepted and current market requirements.

Additionally, the system of the invention involves a restriction model that processes several safety, battery health, legal and user-defined parameters to limit the energy-flow-related decision variables, so that they never cross those thresholds. At the same time, power balance equations are set up so that they model the behaviour of the system. More restrictions are also set to define an ageing model, so decision variables are generated for the cost function to be sensible to this effect on the energy systems.

Restrictions are the core of the modelling, so that the system of the invention is capable of estimating a function strategy of the storage devices and decide to send new parameters of operation to the local control system of each energy storage system for participating in an offer.

The requirements of the electrical market are inputted by grid operators and/or market agents, allowing the system to distinguish between injection or absorption requirements.

These requirements are linked to particular clusters of energy storage devices through particular parameters, as previously explained where some (or all) of them will change their estimation to comply with it. Previous and current requirements as well as global and sub-global requirements, are readjusted and reassigned at the same time, in a dynamic way, ensuring much more efficient results and being able to comply with different requirements at the same time, even for a particular energy device (one device, multiple services).

This maximizes VPP opportunities in the market, which in turn implies a more efficient use of the batteries and in consequence improves prosumers' benefits. In the cases where an energy storage device includes a renewable energy source like photovoltaic panels, the system of the invention contributes to enhancing the benefits of using renewable energy.

The base case is not only important for comparing a new requirement estimated operational cost with the previously accepted one; but it is also necessary if the market requirement is set as a variation of a power transaction between the VPP and the grid, since in that case, the estimated absorption and injection powers of the base case play an important role on determining the absolute market requirement (used in the optimizer) from the relative one that is asked.

Since the optimizer allows energy storage devices to participate in one or multiple grid services, grouped in different clusters or sets of devices at the same time, and to comply with global and sub-global coordinated behaviours; modelling of the global and sub-global requirements is generalized, to allow a greater flexibility of solutions.

For example, the system can decide that an energy storage device should stop contributing to a first grid service requirement, when a second grid service requirement appears, because that device based on its properties and/or capabilities is more suited to be assigned to the second grid service requirement, and that another energy storage device should replace the first one, thereby ensuring a more optimal use of the battery capacities of both energy storage devices.

This also makes it a powerful tool for relaunching the optimization periodically, so that the real states of the energy storage devices and updated forecasts can contribute to the dynamic reassignment of individual requirements; even if the local control of a device can still fulfill a certain requirement, the system can determine that with the new information it is now more suitable if a requirement can be carried by other devices.

When a new market requirement appears, restrictions are added to the system to also ensure the fulfillment of the previously accepted requirements. These may be different depending on the market and type of requirement, but preferably it is not allowed to decrease (taking into account the corresponding power sign according to the sign convention) an accepted contribution to a requirement at a certain hour, and in some cases it may be even impossible to increase the contribution.

The system is configured to calculate the cost of providing a service including the calculation of the difference in costs between the base case and the offer case, with the new grid service requirements being analyzed. Generally, variations from the previous accepted offer case will cause energy storage devices to get into a less beneficial situation, which makes it necessary to compensate these prosumers for it.

As the optimizer calculates the value of each of the decision variables, it is possible to obtain the economic cost induced to each particular system, disaggregating each of the terms that make up the total cost; thus, making it possible to easily determine a retribution method based on balancing the extra costs generated, and even adding a benefit margin. Absorption and injection services will be remunerated according to rates, rules and prices stipulated and previously known.

Furthermore, the system is adapted to implement a cost function that assigns a particular cost to certain decision variables, so that the system is able to optimize the model of behaviour that has been established through the requirements. The cost function, J(x), has to at least include terms that manifest the impact of energy consumption from the grid and the possible benefits of injecting energy into the grid, and this function will then minimize the costs or maximize the benefits. One primitive suggestion of cost function is the minimization of the absorption and injection costs, *C_{grid}* and *Cᵢₙⱼ* respectively, during the considered period, with the power of absorption *P_{grid}* and power of injection *Pᵢₙⱼ* as decision variables, these variables being arrays of decision since there will be a certain *P_{grid}* and *Pᵢₙⱼ* for each of the decision instants. *C_{grid}* and *Cᵢₙⱼ* can be adaptations of the energy tariffs to the particular *P_{grid}* and *Pᵢₙⱼ.*

Batteries' ageing cost is another term of the cost function J(x), as it is an indirect economical loss due to the decrease in the usable battery capacity. It is derived from the decreasing state of health (SOH) due to energy transactions, which directly affects battery capacity. The optimizer is adapted to take into account this ageing effect in its operation.

The system is further adapted to process data relative to the effects of the operations in the State of Health (SOH) of the batteries, and to assign a particular flow of energy to a battery based on its SOH variation, in order to reduce battery degradation.

Therefore, the system prevents major decreases in SOH with respect to not taking into account battery ageing. Some prior art solutions only consider absorption and injection prices, but in the system of the invention the addition of ageing costs makes the system capable of finding a more sensible and precise solution to the battery health and decrease the real economic impact (specially on the long term) of the decision to adopt.

The system is further adapted to generate offers for grid operators and/or market agents, such that the offers include full or partial grid service requirements and a price or value associated with the offer, so that the value depends on the amount of energy and/or power that can be booked.

In case that the requirements can only be partially fulfilled, the system is further adapted to generate counter-offers for grid operators and/or market agents when only a part of the requirements can be booked, or confirm the possibility of booking the totality of the requirements, including a price dependent on the energy that can be booked. Based on forecasts, it is estimated whether it is realistic to book that power, although it cannot be assured that it will be fully fulfilled.

For this purpose, the optimizer replies to a certain offer with a partially fulfilled one if the full request is determined impossible due to the VPP's status, instead of providing the whole requirement in all the time steps or nothing. That is, instead of just resulting in a binary answer ("it is possible to fulfill the whole requirement, at this price" or "it is not possible to fulfill the whole requirement"), the optimizer is able to give an enhanced response ("it is possible to fulfill the whole requirement, at this price" or "only this part of the requirement can be fulfilled, at this price").

A new term is added to the cost function, comprising the decision variable of market requirements (how much energy the VPP will fulfill) weighted by a value with the corresponding sign that directs the variable in the desired direction. This makes the optimizer to get as much fulfillment as possible, with an optimized cost for the VPP.

The system and/or the local control module of the energy storage devices are adapted to estimate for a timestep the available capacity and operation impact of the energy storage device to inject or absorb power into or from the grid, and wherein based on that estimation, the system is further adapted to select one or more energy storage devices with enough capacity available, acceptable battery degradation and self-consumption maximization, and assign them to comply with the requirements that could not be fulfilled in a previous timestep.

The system includes a redistributor module adapted to react to sudden deviations of VPP outputs from the behaviour scheduled to fulfil the commitments to the grid operators and/or market agents, for example due to a disconnection of several devices from the VPP network. The redistributor module reacts to sudden deviations of the estimated network output by modifying working setpoints for one or more energy storage devices, as to redistribute the use of one or more energy storage devices.

The redistributor subsystem provides a quick answer, since launching a new optimization may take too long, and there is a need for a quick answer before a proper optimization can be launched again. The redistributor module decides new setpoints to some devices to satisfy the unfulfilled part of the offer, based on the concepts of elasticity and flexibility.

The system is further adapted to measure in real-time the energy flow between one or more energy storage devices and the grid, and to modify the energy flow to comply with previously unfulfilled requirements.

The system of the invention operates as an elasticity concept, which allows the system to know for each timestep of the estimation, how further up and down the interaction with the grid for each of the energy storage systems in the VPP can be taken. For this, the optimizer is previously requested, for each timestep, an impossibly big injection requirement and absorption requirement in that specific timestep.

A partial fulfillment module will generate the biggest requirement possible, which will be considering all restrictions previously established to the system. This again generates a cost that is directly comparable to the base case. These calculations may be supplied by the local controls of the energy storage devices, saving computational capacity of the system.

This cost difference, coupled with a filtering that eliminates energy storage devices that can contribute too little, will be used to generate a list of prioritized devices to quickly reassign unfulfilled requirements in real time.

Then, this elasticity concept is combined with a much faster one, flexibility, which is another data structure for individual devices that take real-time values of the energy flows of each device and their different limiting parameters, in order to check how much it is physically possible to increase or decrease the energy flow interaction with the grid at that point, without taking into account how it could affect the following hours (that is already specified in the elasticity concept). This is effectively a much quicker analysis.

Through a quick filtering of the list of prioritized devices (given by the elasticity concept) and margins of the real-time energy flow or interaction with the grid (given by flexibility) the method is able to assign a safe, new injection/absorption requirement to local devices in order to rectify an unfulfilled offer until a new optimization is calculated by the system, or a new trigger of the redistributor happens.

The system is further adapted to dynamically assign the use of a fraction of the storage capacity of every energy storage device to the owner and the rest of the capacity to the grid operator and/or market agent if applicable, that is, there is not a fixed fraction of the storage capacity intended for the energy storage device owner and a fixed fraction intended for the grid operator and/or market agent. Therefore, instead of limiting only the agreed fraction of capacity to one of the parties, the fraction of the storage capacity that is assigned to either the energy storage device owner or to the grid operator and/or market agent, ranges between 0 and 100 % of the operational range of the battery capacity, so both parties have access to the full battery potential for either injection or absorption of energy.

This potential, however, is priced according to the opportunity loss that the prosumer is subjected to when deviating from its prosumer-optimal programme, also considering the effects on degradation of the systems that operations make. In other words, the invention can tap into full energy storage device potential, provided that the prosumer is adequately remunerated and that the benefits will be higher than the costs when adapting to a market offer. To achieve this, the invention keeps track of the amount of capacity delivered by each prosumer and the corresponding deviation from their optimal programme. This new paradigm creates a win-win situation for both the prosumer and the VPP manager. The prosumers can be sure that their battery will be attending their own needs as the first priority and any deviation from this case will be fairly remunerated. The VPP management system, on the other hand, has access to significantly higher power capacities for extended periods of time.

Another aspect of the invention refers to a VPP that comprises a plurality of distributed energy storage devices, and a management system as the one defined above.

Still another aspect of the invention is a grid operator and/or market agent platform for managing a network of distributed energy storage devices, which includes a system as the one defined above.

### Brief description of the drawings

Preferred embodiments of the invention are henceforth described with reference to the accompanying drawings, wherein:
Figure 1.- shows a schematic diagram illustrating the system of the invention in use and integrated into the cloud.
Figure 2.- illustrates the concept of VPP and subVPP clustering carried out by the system of the invention. Figure 2A shows a configuration of clusters in a network of distributed energy storage devices due to certain market requirements, and Figure 2B shows another configuration of clusters of the same network, for other market services at a different time period. Figure 2C is a flow chart illustrating how the subVPP clustering is carried out.
Figure 3.- shows a flow chart illustrating the operation of the optimizer engine.
Figure 4.- shows a graph representing the decision variables and energy flows modelled.

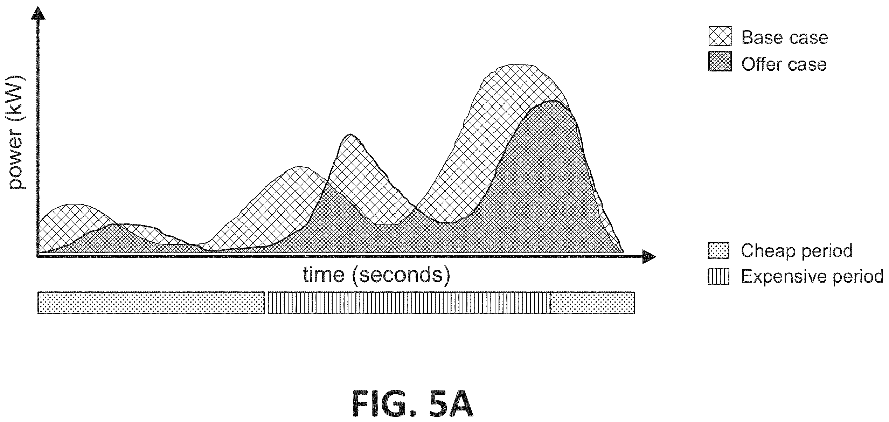

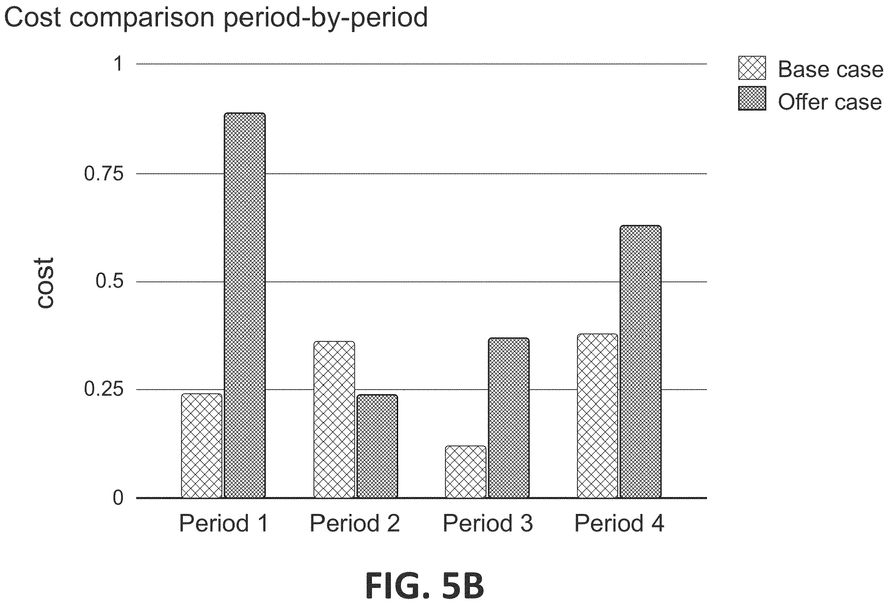

Figure 5.- illustrates the concept of base and offer operational curves and the calculation of the cost for participating in a certain grid market service. In particular, Figure 5A shows a graph comparing a base case and an offer case during cheap and expensive periods, and Figure 5B shows a period-by-period cost comparison.
Figure 6.- shows in Figure 6A a flow chart illustrating an example on how the flexibility / elasticity quick redistribution process is carried out, and in Figure 6B a representation of the flexibility concept.
Figure 7.- shows a flow chart illustrating an example on how the ageing estimation process is performed.
Figure 8.- shows in Figure 8A a flow chart illustrating an example on how the full and partial requirements process is carried out, and in Figure 8B two graphs corresponding to the full and partial requirements processes, respectively.
Figure 9.- shows a flow chart illustrating an example on how the full battery capacity process is partitioned.

### Preferred embodiment of the invention

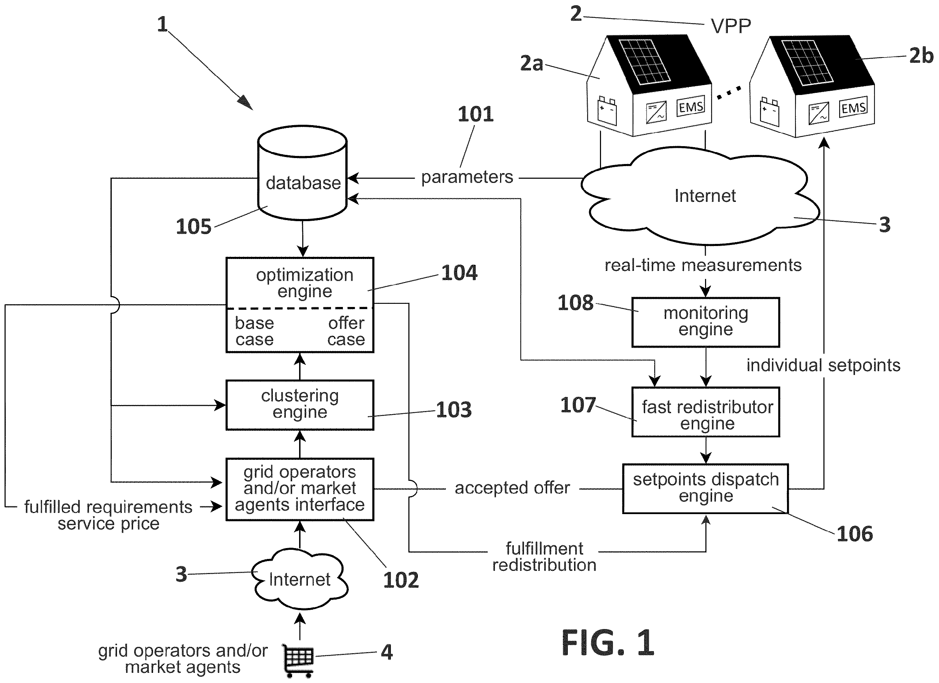

**Figure 1** shows an example of a management system (1) according to the invention, for managing a Virtual Power Plant (2) formed by a plurality of prosumers' energy storage devices (2a,2b, ..., 2n).

This VPP implementation is preferably integrated in the cloud and aggregates energy storage devices in "behind-the-meter" self-consumption installations. These distributed storage devices must meet some minimal specifications to be able to participate in the VPP. The energy storage devices (2a,2b, ..., 2n) might consist in any facility provided with batteries, a local electric installation to supply loads, a local control system and optionally a source of clean energy like photovoltaic panels.

The management system (1) is communicated with the VPP (2) through a communication network like Internet (3), and with grid operators and/or market agents (4), to receive grid services requests that are defined by operation requirements, and to send services offers. This communication link set between the distributed devices and the VPP management system, preferably is implemented by means of a broker message protocol; wherein each distributed device sends the energy-related information needed for the VPP management system, and reads the setpoints produced for them, in case there are any. If no setpoints are received, the distributed devices will follow the base programs established by their local control system. The communication is done through the Internet, therefore the device must be connected for a proper VPP functioning. However, each device needs to be able to operate autonomously, guided by its local control system when the Internet connection is lost.

The system of the invention is adapted to participate, at least, in the following services: node congestion management, matching local generation, managing position in the grid market, fast containment reserve, automatic frequency restoration and manual frequency restoration.

These services are defined in Table I:

**Table I**

| **No.** | **Name** | **Description** |
|---|---|---|
| 1 | Node congestion management | Management of distribution grid node congestion, by ordering power injection/absorption from the VPP. Service only available to a DSO. |
| 2 | Matching local generation | Management of demand at a distribution grid node, in order to match local generation peaks. Done by ordering specific, local generation matching power injection/absorption from the VPP. Service only available to a DSO. |
| 3 | Managing position in the grid market | Position in the market is managed by ordering power injection/absorption from the VPP. Service available to Energy Provider exclusively. |
| 4 | Frequency Containment Reserve (FCR) - Primary Frequency Regulation | Reserve of power bandwidth for frequency regulation purposes. The systems will automatically react by regulating active power to correct frequency deviations. Service only available to a Balance Service Provider. |
| 5 | Automatic Frequency Restoration Reserve (aFRR) - Secondary Frequency Regulation | Reserve of power bandwidth for frequency regulation purposes. A certain injection/absorption power is booked at the VPP. When time comes to deliver, systems will receive power setpoints (measuring between 0 and the booked power) and react as a consequence. The expected actuation time is between 20 seconds and 15 minutes. Service only available to a Balance Service Provider. |
| 6 | Manual Frequency Restoration Reserve | Final reserve of power bandwidth for frequency regulation purposes. A certain injection/absorption power is booked at the VPP. When time comes to deliver, systems will receive power setpoints (measuring between 0 and the booked power) and react as a consequence. The |
| | (mFRR) - Tertiary Frequency Regulation | expected actuation time is between 15 minutes and an hour. Service only available to a Balance Service Provider. |

Preferably, the system (1) is based on an Application Programming Interface (API), that includes the clustering, optimizer, setpoints dispatch, monitoring and fast redistribution engines. The API consults the database on demand for the different calculations and writes the needed information.

The system (1) is adapted to operate the energy storage devices (2a, ..., 2n) to inject and receive power into or from a power grid.

The system (1) comprises an optimization module or engine (104) that manages base cases and offer cases, and a database (105) communicated with the optimization engine (104). The database (105) is fed with parameters (101) of properties or capacities of the energy storage devices (2a, ..., 2n).

Furthermore, the system (1) comprises a grid operator and/or market agent interface (102) for the communication with grid operators and/or market agents (4) so as to obtain grid services requirements to be fulfilled by the VPP (2). The system (1) comprises a clustering engine (103) communicated with the optimization engine (104), with the grid operator and/or market agent interface (102) and with the database (105).

Grid operators and/or market agents (4) can communicate with the system (1) via the grid operator and/or market agent interface (102), via API requests or interactively via HMI. Several services can be booked, and depending on its characteristics, only some devices (2a, ..., 2n) are allowed to participate. Therefore, the clustering engine (103) filters by the appropriate initial candidates to participate in the service. It will also take care of the preprocessing of information to input into the optimization engine (104).

The clustering engine (103) together with the optimization module or engine (104) are adapted to dynamically configure the VPP, as to be able to participate in as many grid market opportunities as possible. This is carried out by setting clusters of energy storage devices (2a, ..., 2n) based on the parameters (101) defining the properties of the energy storage devices (2a, ..., 2n) and by selecting those energy storage devices (2a, ..., 2n) that are more suitable to fulfill grid services operation requirements of one or more grid services.

In this way, the system (1) is capable of injecting or absorbing energy into or from the grid during a time period, through at least one cluster of selected energy storage devices, to provide one or more grid service demanded by grid operators and/or market agents (4).

As illustrated in **Figure 1**, the optimization engine (104) is adapted to calculate, based on the received data and parameters, whether the requirements of a demanded grid service can be met and at what price, and based on that calculation to send a response through the grid operator and/or market agent interface (102) to the grid operator and/or market agent requesting the service. The optimization engine (104) is also communicated with the setpoints dispatch engine (106), so that in case that an offer is accepted by a grid operator and/or market agent, the optimization engine (104) forwards offer fulfillment redistribution parameters to the setpoints dispatch engine (106), which in turn generates and distributes individual setpoints for the selected energy storage devices (2a, ..., 2n).

The setpoints dispatch engine (106) performs the task of disaggregating past commitments of the VPP after having accepted one or more offers, into individual booking setpoints for the corresponding devices in the VPP. This subsystem also handles the ancillary services of frequency regulation (Automatic Frequency Restoration Reserve (aFRR), also called Secondary Frequency Regulation, and Manual Frequency Restoration Reserve (mFRR), also called Tertiary Frequency Regulation. For these market services, it sends actuation setpoints according to the real-time trigger signal provided by a grid operator, such as the Transmission System Operator (TSO), or the Balance Responsible Party (BRP). The operational control parameters are sent from the operator/agent side to the storage devices.

Periodically, the path 101-103-104-105-106 can be executed to redistribute the requirements in a more optimal way due to more accurate and updated forecasts, or the acceptance of new requirements for the whole or sub-groups of the VPP. In the database (105) forecasted and real-time measurements are stored. On the other hand, the VPP devices send their parameters and real-time energy-related measurements.

The system further comprises a monitoring engine (108) to monitor the energy storage devices (2a, ..., 2n), to obtain real-time measurements that are fed to a fast redistribution engine (107) when there is an unexpected deviation, which in turn is communicated with the database (105) and with the setpoints dispatch engine (106). The monitoring engine (108) calculates whether all requirements are highly probable to be met. If a power mismatch is encountered in the near future, the estimated unmet offer powers are sent to the redistributor module (107), which quickly calculates new setpoints to fulfill the unmet requirements. These new setpoints are then sent by the dispatch engine (106) to some distributed devices (2a, ..., 2n). Periodically the fast redistribution engine (107) updates the elasticity structure of each device to establish the predominance for taking requests of certain devices.

In a preferred embodiment, the monitoring engine (108) involves two phases. Variables of state such as state of charge and inverter and/or meter power are encouraged to be monitored. During the first phase, offer fulfilment is checked on a global VPP scale. If a mismatch is registered, the second phase is entered, where expected and measured individual device outputs are compared. The two stages allow for a healthy degree of individual errors, as long as they cancel out on the global scale. After the second phase of monitoring identifies the deviations of individual device programs from expected ones, the system addresses the fast redistributor (107), which consults the flexibility-elasticity structures generated from the database information (105) and establishes new setpoints.

Grid market services requirements (offers) are not only simple demands of absorption or injection (absolute values) or variations of the previously power estimated. The system of the invention links these requirements to specific clusters (5) of energy storage devices (2a, ..., 2n). These requirements are also very important to determine how to treat overlapping requirements. The first step is to cluster the devices for different grid operators and/or market agents.

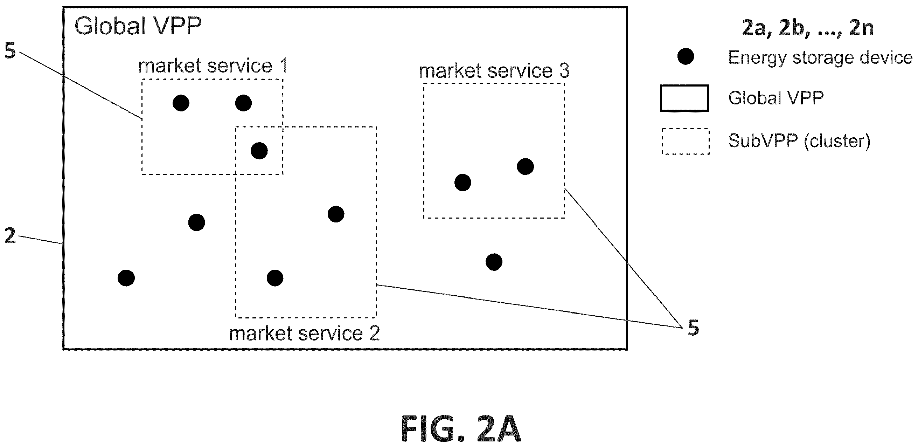

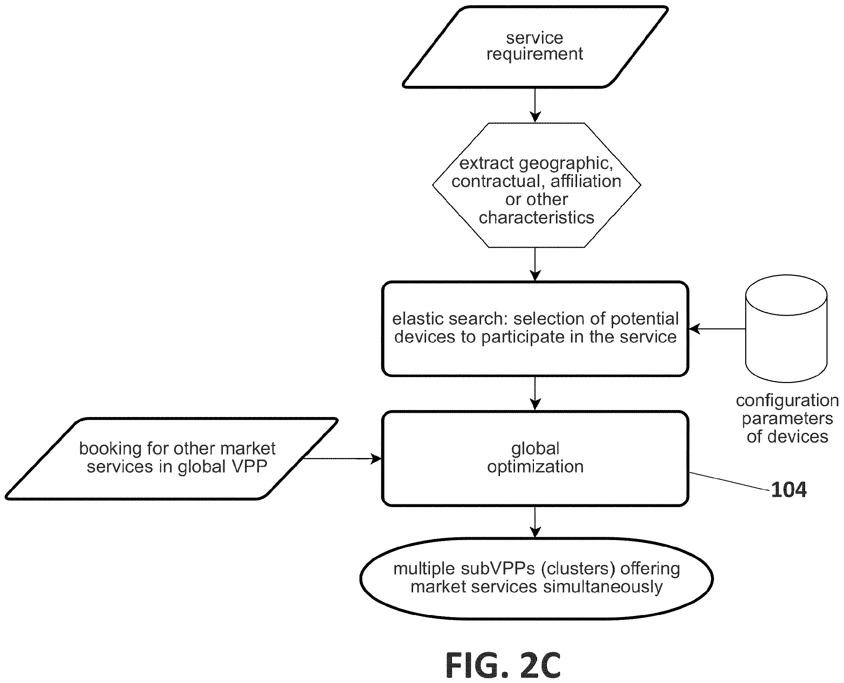

A visual example of a VPP dynamic division in clusters (5) is shown in **Figure 2A** as the system allows the VPP to generate requirements for different groups or clusters (5) of energy storage devices (2a, ..., 2n) at the same time.

Based on the properties of the energy storage devices (2a, ..., 2n) of the network of devices, the system (1) is adapted to dynamically set clusters (5) of energy storage devices (2a, ..., 2n) by selecting those that, at a particular time, are more suitable to fulfill the requirements of one or more grid services. The system enables injection or absorption of energy to or from the grid during a time period, through at least one cluster of selected energy storage devices, to provide at least one grid service demanded by grid operators and/or market agents.

As it can be noted in **Figure 2A****,** the system is adapted such that any energy storage device (2a, ..., 2n) could be assigned to more than one cluster (5), so that that device can provide one or more grid services simultaneously to one or more grid operators and/or market agents. The system monitors grid service requirements, and based on forecast deviations of the requirements or newly detected requirements, reassigns one or more energy storage devices previously assigned to a cluster and a grid service, to a different cluster and/or to a newly detected grid service.

As it can be noted in **Figure 2A**, a cluster or a part of a cluster, can be assigned to another cluster of energy storage devices.

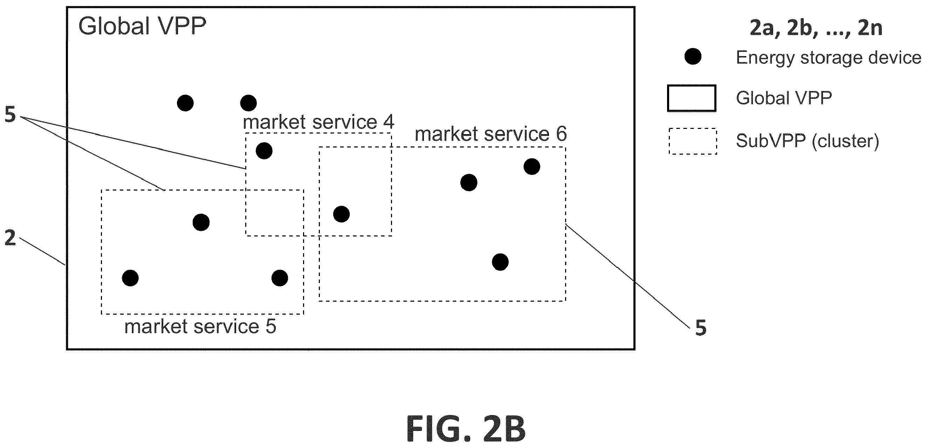

The process followed by the system to dynamically associate or link energy storage devices in clusters, is shown in **Figure 2B****.** Once a grid service is received, its characteristics that define the service, such as: geographic, commercial and/or power requirements are extracted. Then, the system (1) performs an elastic search for selecting potential energy storage devices (2a, ..., 2n) considering the configuration parameters of the devices that can participate in a grid service because they are capable of fulfilling the service requirements.

A list of selected devices is fed to the optimization engine (104) of the system, taking into account energy bookings for other market services delivered by the VPP (2). The optimization engine (104), is adapted to generate multiple configurations of clusters (5) or subVPPs, to deliver one or more market services simultaneously. Absorption and injection services will be remunerated according to rates, rules and prices stipulated and previously known.

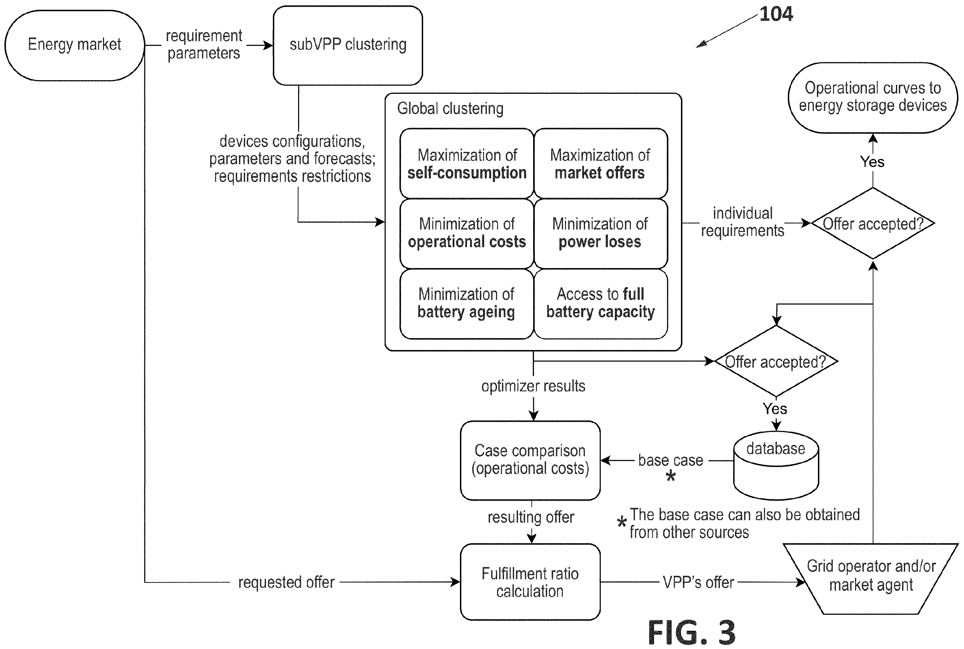

**Figure 3** is a flow chart illustrating the operation of the optimizer engine (104). The optimizer engine (104) comprises: a maximisation of self-consumption module, a maximisation of market offers module, a minimisation of operational costs module, a minimisation of power losses, a minimisation of battery ageing effects module, and an access to full battery capacity module.

The optimizer engine (104) receives after the subVPP clustering process, the configuration of energy storage devices, as well as services parameters and forecast requirements restrictions. Based on that data, the optimizer engine (104) generates optimization results and individual requirements for the energy storage devices.

A case comparison module compares a base case (preferably obtained from a database) with an offer case, to determine, based on the optimization results, the associated operational cost and generates a resulting offer. Then, a fulfillment ratio calculation module determines to what extent a requested offer requirements can be met by the resulting offer, and generates a VPP's offer to a grid operator and/or market agent requesting the service.

The grid operator and/or market agent responds to the VPP's offer, and if it is accepted then the operational curves are sent from the database to the energy storage devices, and the system returns to the global VPP monitoring. If the offer is not accepted, the system returns directly to the global VPP monitoring. The system also analyses at this stage whether it is necessary or not to redistribute the energy storage devices.

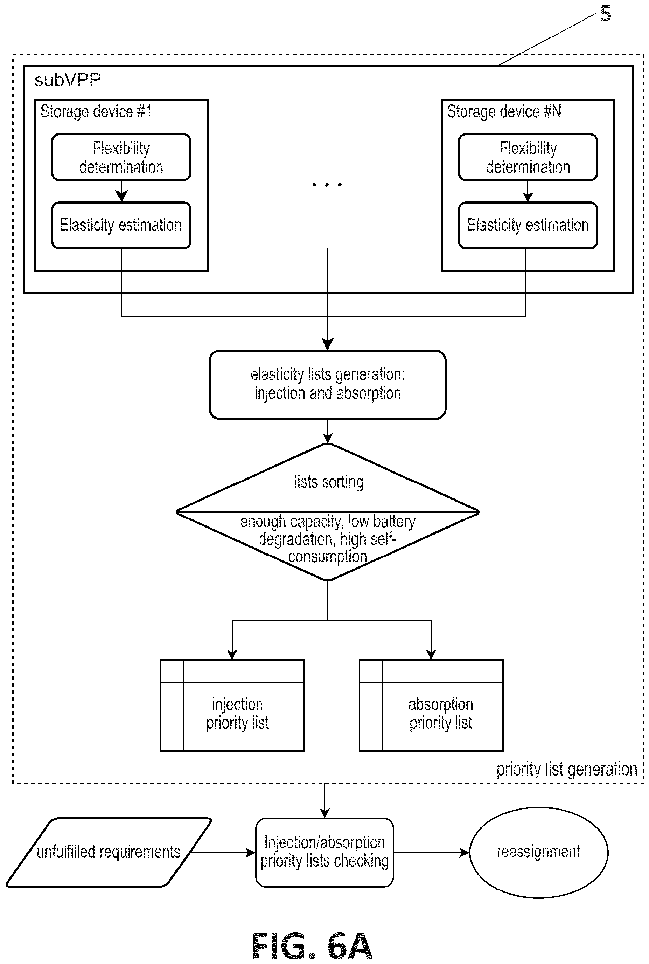

**Figure 6A** is a flow chart illustrating an example on how the flexibility / elasticity quick redistribution process is carried out by the system, to generate a list of priority energy storage devices. Each energy storage device includes a local control that determines its flexibility and elasticity. The global control could also determine the flexibility / elasticity if necessary. This data is fed to a list generation module that generates an injection and absorption elasticity list, which is then shortened based on several conditions: enough capacity, low battery degradation, high-self consumption. From here, two priority lists are generated, namely an injection priority list and an absorption priority list.

These two lists are checked as to ascertain which energy storage devices could satisfy unfulfilled requirements, and some energy storage devices could be reassigned.

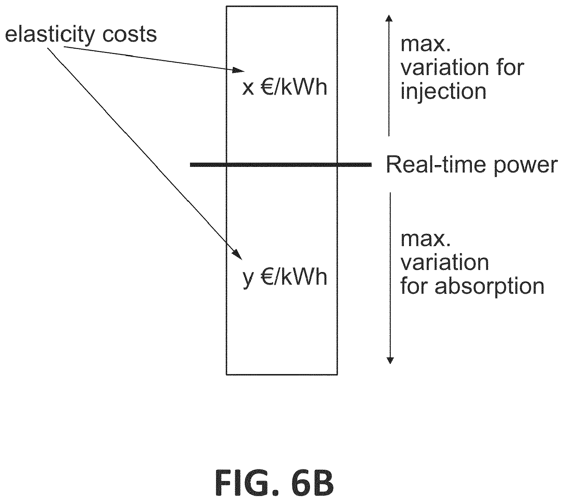

**Figure 6B** is a representation of the flexibility concept that allows a fast redistribution due to sudden deviations from the offer fulfillments. It depicts the capability of an energy storage device to absorb or inject extra power from its base case, as well as the respective cost of these actions.

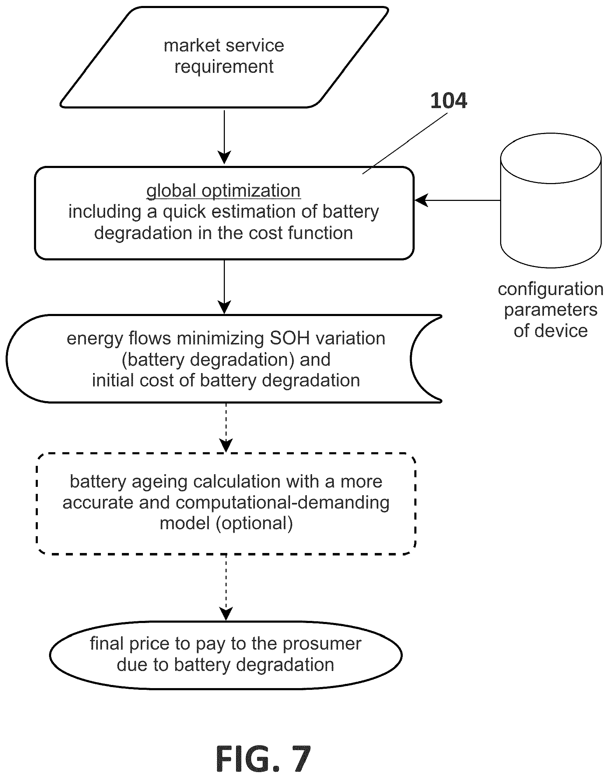

**Figure 7** is a flow chart of the batteries ageing estimation process, wherein the optimizer engine (104) performs an estimation of the battery degradation in the cost function J(x) for a market service requirement, and considering the configuration parameters of the energy storage devices. An allowable energy flow for a battery is then determined to minimise battery degradation (SOH variation), and initial cost caused by battery degradation.

Optionally, battery ageing is calculated with a more accurate and computational-demanding model. Finally, the price to pay to the prosumer due to battery degradation is determined.

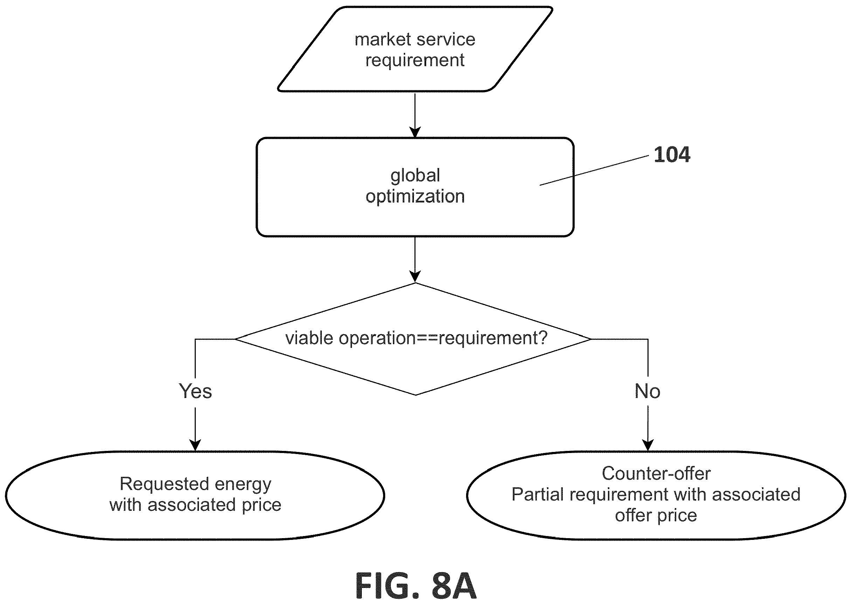

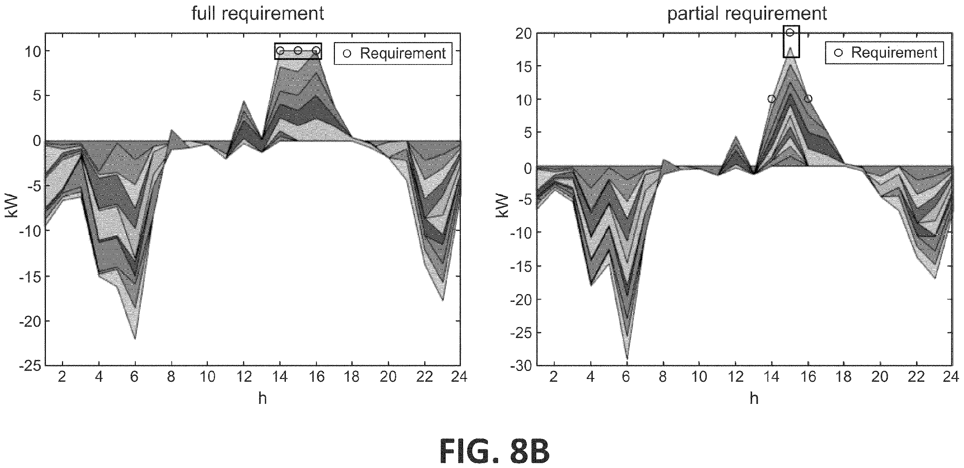

**Figure 8A** shows a flow chart illustrating how the full and partial requirements process is carried out. The optimization engine (104) processes marker service requirements and determines whether the service requirements can be met. In the affirmative case, the requested energy is delivered with the corresponding price, and if not, a counter-offer is sent as a response including the partial requirements that can be delivered and the corresponding counter-offer price.

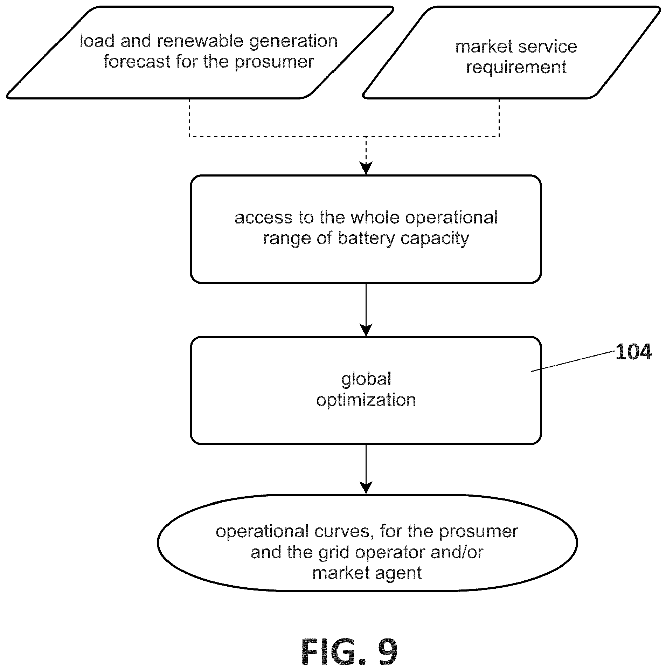

**Figure 9** shows a flow chart illustrating an example on how the full battery capacity assignment process is carried out. Data relative to load and renewable generation forecast of the prosumers, as well as data relative to marker service requirements are processed to determine degree of access to the whole operational range of battery capacity. Then, based on that determination, the optimizer engine (104) generates operational curves for the prosumer and for the grid operator and/or market agent.

In a practical exemplary implementation, a request is received from the grid operators and/or market agents (4), so that the grid operators and/or market agents can incorporate the system into their platforms. The grid operator and/or market agent can request a service by specifying the type of service and the energy transactions at the desired timestamp ranges, either via absolute powers or deltas of powers to increase or decrease. The system then performs the calculations and sends as a response the fulfilled offer (totally or partially from the requested requirements) together with the associated price. In a new request the grid operator and/or market agent can accept the offer.

In another exemplary implementation, a user-friendly HMI (human-machine interface) allows the different grid operators and/or market agents to log in and access the capacities of storage systems via available services. Clustering is applied so that each grid operator and/or market agent only can examine the appropriate devices or subVPP. The current status of the VPP is displayed (including virtual aggregated state of charge and active inverter, battery, PV and grid powers), along with the forecasts and the plant elasticity.

Interactively, the user can request injection or absorption of energy for a certain time horizon and obtain an estimated price of the service along with a simulation of the resulting behaviour of the plant in form of time series. The user can then decide either to accept the offer, to request a new offer or to exit the platform. In case the grid operators and/or market agents accept the offer, they can monitor actual and requested VPP powers during its duration. It is important to note that examining the structure of costs, the user can corroborate that the most suitable devices have been selected for the offer, maximising the profit.

In both practical implementations, the grid operator and/or market agent can receive a report about the energy transaction to know the degree of fulfillment of the offer.

The grid operators and market agents comprises: generators, energy providers, distribution system operators or transmission system operators. A proposed method to cluster the potential storage systems that could provide a service to the corresponding grid operator and/or agent is elastic search or filtering (103). Configuration parameters of each device are taken into account, location-related (derived from latitude and longitude for example) to establish the belonging node or park or directly more specific information such as the retail company subscribed to.

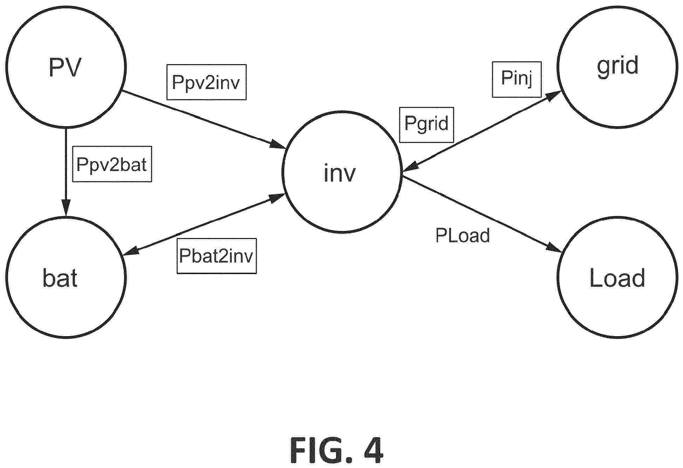

The preferred embodiment for the optimization engine (104) is mixed integer linear programming, due to its potential to model characteristics of the different energy flows (such as different efficiencies) and its acceptable computational time for a scalable VPP. Another alternative for faster computational times is linear programming. **Figure 4** shows the preferred embodiment of the structure of the decision variables (in boxes) and energy flows used for behaviour modelling.

As a compromise between speed and precision, a simplified ageing model could be integrated into the optimization engine. One example that tries to minimis e the non-linear nature of the ageing models is piecewise linear approximations. For example, they can reference a cycle percentage in a certain time-frame with the SOH reduction, with different slopes depending on the amount of stress (cycle percentage) caused to the battery due increases in charge/discharge cycles. Complementarily, after the optimization process a non-linear and more accurate model employing historical state of charge (SOC) and battery cell temperatures could allow to obtain a more realistic economical impact of ageing to add to the final cost of operation. The economical cost can be understood as a depreciation of the initial price of the battery.

All equations related to energy transactions should consider the particular efficiencies related to the different power losses. In the case of a linear programming model, the non-linear models of efficiencies need to be linearly approximated. Different strategies involve new restrictions to the model, such as establishing an operation zone where these efficiencies can be simplified as almost constant, or utilizing more complex techniques such as Special Ordered Sets of Type 2 (SOS2) or semi-continuous variables. A less accurate approach, but much faster in execution is considering a constant value, proven statistically significant in historic energy transactions.

In summary, the system of the invention is dynamic in terms of distribution and redistribution to the participating devices - groups of energy storage devices can be selected by different parameters relevant to the grid administration. The VPP as a whole, VPP sub-groups as well as each storage device can provide multiple grid services simultaneously; and the optimization allows for these requirements to jump from one device to another when new requirements appear, or the estimated conditions change.
1. The VPP can access full battery capacity, opening up more service options (for example the ones that require specific minimum commitment power) and maximising the utilisation of renewable energy.
2. The VPP does not compromise prosumers' self-consumption nor savings due to an adequate remuneration that takes into account sustained opportunity costs.
3. It selects economically optimal scenarios for market participation with the highest returns, continuously re-optimising individual battery programmes subject to past market commitments.
4. It allows flexibly filtering and grouping devices for specific electricity grid services, as a function of the grid operator and/or market agent that the service is addressed to (for example DSOs, Energy Providers, or Balance Responsible Parties (BRP)) while optimizing for all of them at the same time.
5. The VPP, its subgroups as well as each storage device, can provide multiple grid services simultaneously.

Other preferred embodiments of the present invention are described in the appended dependent claims and the multiple combinations of those claims.

## Claims

1. Management system for distributed storage networks,
wherein the system is adapted to operate a plurality of energy storage devices to inject and to receive power into or from a power grid,
wherein the system is further adapted to process grid services requests from grid operators and/or market agents, wherein the grid services requests are defined by operation requirements,
wherein the system is further adapted to dynamically set clusters of energy storage devices based on properties of the energy storage devices, and selecting those energy storage devices that are suitable to fulfill grid service operation requirements of at least one grid service, and
wherein the system is further adapted to allow injection or absorption of energy into or from the grid during a time period, through at least one cluster of selected energy storage devices, to provide at least one grid service demanded by grid operators and/or market agents.

2. System according to claim 1, further adapted to manage at least one energy storage device such that that device can provide one or more grid services simultaneously to one or more grid operators and/or market agents.

3. System according to claim 1 or 2, further adapted to dynamically assign an energy storage device to one or more than one cluster.

4. System according to any of the preceding claims, further adapted to monitor the status of the energy storage devices and grid operators and/or market agents services requirements, and based on forecast deviations of the requirements or newly detected requirements, reassigning one or more energy storage device previously assigned to a cluster and a grid service, to a different cluster and/or to a newly detected grid service.

5. System according to any of the preceding claims, further adapted to configure a cluster of one or more energy storage devices within another cluster of energy storage devices.

6. System according to any of the preceding claims, further adapted to process data relative to the effects of the operations in the State of Health (SOH) of the batteries, and to assign a particular flow of energy to a battery based on its SOH variation, in order to reduce battery degradation.

7. System according to any of the preceding claims, further adapted to generate offers for grid operators and/or market agents, wherein the offers include full or partial grid service requirements and a value associated to the offer that depends on the deviation from the prosumer-optimal energy management scenario.

8. System according to claim 7, wherein one or more energy storage devices has a local control module, and wherein the system and/or the local control module are adapted to estimate for a timestep the available capacity and operation impact of the energy storage device to inject or absorb power into or from the grid, and wherein based on that estimation, the system is further adapted to select one or more energy storage devices with enough capacity available, acceptable battery degradation and self-consumption maximisation, and assign them to comply with the requirements that could not be fulfilled in a previous timestep.

9. System according to claim 8, further adapted to react to sudden deviations of the estimated network output by modifying working setpoints for one or more energy storage devices, as to redistribute the use of one or several energy storage devices.

10. System according to claim 9, further adapted to measure in real-time the energy flow between one or more energy storage devices and the grid, and to modify the energy flow to comply with unfulfilled requirements.

11. System according to any of the preceding claims, wherein the grid services are at least one of: node congestion management, matching local generation, managing position in the grid market, fast containment reserve, automatic frequency restoration and manual frequency restoration.

12. System according to any of the preceding claims,
wherein the system is further adapted to dynamically assign the use of a fraction of the storage capacity of every energy storage device to the owner and the rest of the capacity to the grid operator and/or market agent if applicable, that is, there is not a fixed fraction of the storage capacity intended for the energy storage device owner and a fixed fraction intended for the grid operator and/or agent, and
wherein the fraction of the storage capacity assigned to either the energy storage device owner or to the grid operator and/or market agent, ranges between 0 and 100 % of the operational range of the battery capacity.

13. A Virtual Power Plant comprising a plurality of distributed energy storage devices, and a management system as the one defined in any of the preceding claims.

14. A grid actor platform for managing a network of distributed energy storage devices, including a system as the one defined in any of the claims 1 to 12.
